Europäisches Patentamt

European Patent Office

Office européen des brevets

(11) Veröffentlichungsnummer: **0 242 562 B1**

(12) # EUROPÄISCHE PATENTSCHRIFT

(45) Veröffentlichungstag der Patentschrift: **24.06.92**

(51) Int. Cl.5: **H04M 3/18**, H04M 3/00, H04M 3/30

(21) Anmeldenummer: **87103427.8**

(22) Anmeldetag: **10.03.87**

(54) Schutzschaltung für den Überspannungsschutz einer Teilnehmeranschlussschaltung.

(30) Priorität: **23.04.86 DE 3613720**

(43) Veröffentlichungstag der Anmeldung:
**28.10.87 Patentblatt 87/44**

(45) Bekanntmachung des Hinweises auf die
Patenterteilung:
**24.06.92 Patentblatt 92/26**

(84) Benannte Vertragsstaaten:
**AT BE CH DE FR GB IT LI LU NL SE**

(56) Entgegenhaltungen:
DE-A- 3 304 438
US-A- 3 725 613
US-A- 4 377 832

IEEE ELECTRO, Band 8, 1983, Seiten 1-16,
New York, US; A. UGGE: "Total silicon subscriber to subscriber"

IEEE JOURNAL OF SOLID-STATE CIRCUITS,
Band SC-19, Nr. 3, Juni 1984, Seiten 406-413,
IEEE, New York, US; G. REMMERIE et al.: "10
omega 370 V high voltage switches for line
circuit application"

(73) Patentinhaber: **SIEMENS AKTIENGESELL-
SCHAFT
Wittelsbacherplatz 2
W-8000 München 2(DE)**

(72) Erfinder: **Lechner, Robert, Dipl.-Ing.
Haidfeldstrasse 5
W-8156 Otterfing(DE)**
Erfinder: **Rudolf, Hans-Werner, Dr.rer.nat.
Wörthstrasse 13
W-8000 München 80(DE)**
Erfinder: **Krimmer, Roland, Dipl.-Ing.
Johann-Clanze-Strasse 89
W-8000 München 70(DE)**

**Beschreibung**

Die Erfindung betrifft eine Schutzschaltung für den Überspannungsschutz einer Teilnehmeranschlußschaltung gemäß dem Oberbegriff des Anspruchs 1.

Die Notwendigkeit einer solchen Schutzschaltung entsteht durch den Umstand, daß die Schnittstellenschaltung der Teilnehmeranschlußschaltung unter Verwendung elektronischer Schaltelemente aufgebaut ist, und daß die Schalter für den Testzugriff elektronische Schalter sind.

Gemäß Druckschrift DE-A1 33 04 438 ist eine Schutzschaltung bekannt, welche als Überspannungsschutz der Elektronik einer Teilnehmerschaltung und zugeordneter Schalter dient. Hierzu ist die Schaltung leitungsseitig bezüglich der zu schützenden Elemente angebracht und besteht aus identischen Schwellwertgliedern, durch welche Überspannungen auf Erdpotential abgeleitet werden. Je Leitungsader ist des weiteren ein Schaltelement erhöhter Spannungsfestigkeit vorgesehen, welches einen Strompfad zur Prüfung der Teilnehmerleitung auf Leitungsunterbrechung im Falle einer Zerstörung des Schwellwertgliedes ermöglicht.

An eine solche Schutzschaltung ist die Forderung zu stellen, daß sie die Widerstandssymmetrie auf den Adern der Teilnehmeranschlußleitung nicht beeinträchtigt. Es muß ferner wie bei der Schutzschaltung in der genannten Druckschrift gewährleistet sein, daß im Falle einer auf eine Störung zurückzuführenden Stromunterbrechung des Stroms auf der Teilnehmeranschlußleitung feststellbar sein muß, ob diese auf einen Defekt der Teilnehmeranschlußleitung selbst oder auf einen Defekt der Schutzschaltung zurückzuführen ist. Darüber hinaus soll die Schutzschaltung mit möglichst geringem Kostenaufwand realisierbar sein.

Diese Aufgabe wird erfindungsgemäß durch die Merkmale des Anspruchs 1 gelöst.

Gemäß einer durch Anspruch 2 angegebenen Ausgestaltung der Erfindung ist an die Anschlüsse der Teilnehmeranschlußschaltung jeweils auf der Teilnehmeranschlußschaltungsseite des betreffenden Zugriffsschalters für den Zugriff zur Teilnehmeranschlußschaltung ein weiteres Schwellwertglied angeschlossen, dessen Ansprechschwelle unterhalb der Ansprechschwelle der übrigen Schwellwertglieder liegt.

Hierdurch kann Berücksichtigung finden, daß aus besstimmten Gründen die Ansprechschwelle der eigentlichen Schutzschaltung nicht so niedrig gelegt werden kann, daß sie in jedem Falle eine Zerstörung der Elemente der Schnittstellenschaltung verhindert. Einer dieser Gründe liegt darin, daß die Rufwechselspannung, die auf die Teilnehmeranschlußleitung gegeben wird, unter Umständen mit beträchtlicher Amplitude auftritt. Es muß daher die Ansprechschwelle der Schutzschaltung und dementsprechend die Spannungsfestigkeit der Zugriffsschalter so groß sein, daß einerseits die Schutzschaltung nicht anspricht, andererseits keine Zerstörung der Zugriffsschalter zu befürchten ist, wogegen an die Schaltelemente der Schnittstellenschaltung im Hinblick darauf keine besonderen Anforderungen zu stellen sind, da in der Rufphase die Schnittstellenschaltung von der Teilnehmeranschlußleitung abgetrennt und somit von der Rufspannung nicht beeinflußbar ist.

Der sogenannte Feinschutz, der durch die erwähnten weiteren Schwellwertglieder erzielbar ist, kann gemäß noch einer weiteren Ausgestaltung der Erfindung dadurch ergänzt sein, daß die im Hinblick auf Tests vorgesehenen vorgenannten Trennungsschalter durch elektronische Bauelemente realisiert sind, die im Durchlaßzustand einen für eine Strombegrenzung relevanten Durchlaßwiderstand aufweisen.

Nachstehend wird die Erfindung anhand eines Ausführungsbeispieles unter Bezugnahme auf eine Zeichnung näher erläutert.

In der Zeichnung zeigen:

Fig. 1      ein Schaltbild, das die Anordnung der erwähnten Testschalter in Relation zu einer Teilnehmeranschlußleitung und der betreffenden Teilnehmeranschlußschaltung ohne Schutzschaltung veranschaulicht,

Fig. 2      ein Ausführungsbeispiel der erfindungsgemäßen Schutzschaltung, soweit sie eine Ader der Teilnehmeranschlußleitung bzw. einen Eingang der Teilnehmeranschlußschaltung betrifft.

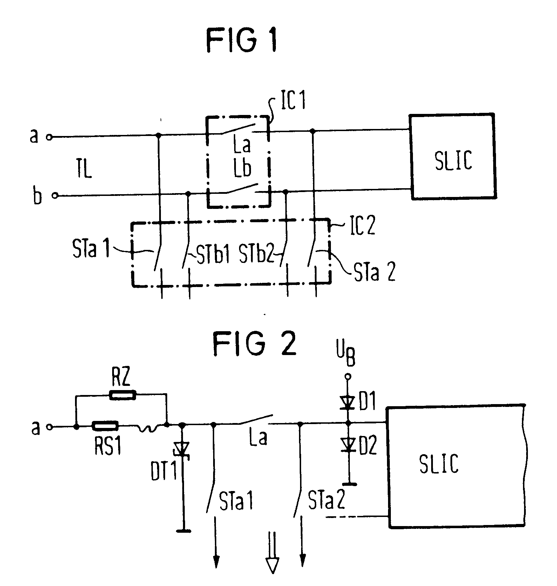

In der Figur 1 ist mit SLIC eine Teilnehmeranschlußschaltung angedeutet, die dem Anschluß einer Teilnehmeranschlußleitung TL mit den Adern a und b dient.

Im Zusammenhang mit dem Testzugriff zu dedr Teilnehmeranschlußleitung und/oder der Teilnehmeranschlußschaltung SLIC sind Testzugriffsschalter STa1, STa2 und STb1, STb2 sowie Trennungsschalter bzw.Längsschalter La und Lb vorgesehen. Mit Hilfe der Längsschalter La und Lb können die Adern a und b der Teilnehmeranschlußleitung TL separat oder gemeinsam von den Anschlüssen der Teilnehmeranschlußschaltung SLIC abgetrennt werden.

Die Testzugriffsschalter STa1 und STb1 sind auf der Leitungsseite der Längsschalter La und Lb an die Adern a und b der Teilnehmeranschlußleitung angeschlossen und führen zu hier nicht dargestellten Einrichtungen zur Durchführung des Leitungstests. Die Testzugriffsschalter STa2 und STb2 sind auf der der Teilnehmeranschlußschaltung zugekehrten Seite der Längsschalter La und Lb an die Adern der Teilnehmeranschlußschaltung angeschlossen und führen ebenfalls zu den erwähnten Testeinrichtungen.

Die Zugriffsschalter und Längsschalter können in beliebiger Kombination betätigt werden. Bei geöffneten Längsschaltern La und Lb ist es möglich, über die Zugriffsschalter getrennt die Teilnehmeranschlußleitung mit dem daran angeschlossenen Teilnehmerendgerät einerseits und die Teilnehmeranschlußschaltung andererseits zu prüfen.

Bei den erwähnten Schaltern handelt es sich um elektronische Schalter, die beispielsweise als MOS-Transistorpaar ausgebildet sein können, wobei die Transistoren gegeneinander geschaltet sind, um Ströme beider Polaritäten zu sperren, sie können aber auch als Triac-Schalter bzw. als Kombinationen von Triac-Schaltern und MOS-Transistoren ausgebildet sein.

Die hier nur als Schaltungsblock dargestellte Teilnehmeranschlußschaltung SLIC enthält unter anderem eine elektronische Schnittstellenschaltung, in der elektronische Schaltelemente die Funktion von Übertragern und Widerständen übernehmen, wie sie an entsprechender Stelle bei konventionellen Teilnehmeranschlußschaltungen vorgesehen sind.

Sowohl die Schaltelemente der Schnittstellenschaltung als auch die im Zusammenhang mit dem Test benötigten elektronischen Schalter sind durch äußere elektrische Beeinflussungen, die beispielsweise durch Blitzschlag oder durch Netzberührung über die Teilnehmeranschlußleitung an sie gelangen, gefährdet und erfordern daher einen Überspannungsschutz, wobei die vorstehend ausgeführten Bedingungen zu erfüllen sind.

Die Figur 2 zeigt nun den auf eine Leitungsader der Teilnehmeranschlußleitung bzw. auf einen betreffenden Anschluß der Teilnehmeranschlußschaltung bezogenen Teil der erfindungsgemäßen Schutzschaltung. Zu diesem Teil der Schutzschaltung gehört ein relativ niederohmiger Widerstand RS1 von beispielsweise 50 Ohm, der auf der Seite der Teilnehmeranschlußleitung des Längsschalters La in die Ader a der Teilnehmeranschlußleitung eingefügt ist, sowie als schwellwertbehaftetes Schaltelement eine Thyristordiode DT1, d.h. also eine Vierschichtdiode, die zwischen den der Teilnehmeranschlußschaltung SLIC zugewandten Anschluß des Widerstandes RS1 und einem Erdpotential führenden Schaltungspunkt angeschaltet ist. Statt der Thyristordiode kann auch ein Thyristor verwendet sein, dessen Durchbruchspannung durch Einstellen eines bestimmten Steuerstroms den Bedürfnissen entsprechend festgelegt ist.

Dem Widerstand RS1 ist ein spannungsfester hochohmiger Widerstand RZ parallel geschaltet, der beispielsweise 20 kOhm aufweisen kann. Die Testzugriffsschalter STa1 und STa2 sind in derselben Weise an die Ader a der Teilnehmeranschlußleitung bzw. an den entsprechenden Anschluß der Teilnehmeranschlußschaltung SLIC angeschlossen wie in Figur 1.

Die aus dem Widerstand RS1 und der Thyristordiode DT1 bestehende Schutzschaltung schützt sowohl den Längsschalter La, die Zugriffsschalter STa1, STa2 sowie die elektronischen Schnittstellenschaltung der Teilnehmeranschlußschaltung SLIC gegen Überspannungen, indem die Thyristordiode DT1, die normalerweise ihren hochohmigen Zustand einnimmt, beim Auftreten solcher Überspannungen in den niederohmigen Zustand übergeht und damit die Überspannungen gegen Erdpotential ableitet.

Sollte der Widerstand RS1 durch eine Überbelastung unterbrochen sein, was insbesondere dann häufiger der Fall sein kann, wenn er als Sicherungswiderstand ausgebildet ist, dann läßt sich immer noch über den Zugriffsschalter STa und dem Widerstand RS1 parallel liegenden hochohmigen Widerstand RZ, der wegen seiner relativ großen Spannungsfestigkeit einer solchen Zerstörungsgefahr nicht ausgesetzt ist, immer noch durch eine Widerstandsmessung feststellen, ob eine stromunterbrechung auf der Teilnehmeranschlußleitung auf eine solche Zerstörung des Widerstandes RS1 oder auf eine Unterbrechung der Ader der Teilnehmeranschlußleitung zurückzuführen ist.

Je nach Art der Einspeisung der Rufsignalspannung kann es erforderlich sein, die Ansprechschwelle der Schutzschaltung so hoch zu legen, daß Spannungen an die elektronischen Schalter und an die Schnittstellenschaltung gelangen können, die deren Spannungsfestigkeit übersteigen. Im Hinblick auf die Rufsignalspannungen müssen die Testschalter eine entsprechend erhöhte Spannungsfestigkeit aufweisen, die elektronische Schaltelemente der Schnittstellenschaltung sind hingegen durch die Rufwechselspannungen nicht gefährdet, da im Betriebszustand "Ruf" die Teilnehmeranschlußschaltung von der Einspeisestelle für die Rufwechselspannungen abgetrennt ist. Damit Spannungen mit Amplituden, die über der für die Bauelemente der Schnittstellenschaltung tolerierbaren Grenze, jedoch noch unterhalb der Ansprechschwelle der Schutzschaltung RS1/DT1 liegen, die Bauelemente der Schnittstellenschaltung nicht zerstören können, ist gemäß weiterer Ausgestaltung der Erfindung zum Feinschutz der Schnittstellenschaltung der Teilnehmeranschlußschaltung zwischen dem Zugriffsschalter STa2 und dem Eingang der Schnittstellenschaltung ein weiteres Schwellwertglied in Form von zwei Dioden D1 und D2 vorgesehen, von denen die Diode D1 zwischen einem auf Speisepotential liegenden Schaltungspunkt und dem Eingang der Teilnehmeranschlußschaltung und die andere zwischen diesem Eingang und einem Erdpotential führenden Schaltungspunkt angeschlossen ist. Die Ansprechschwelle dieses Schwellwertgliedes ist entsprechend niedriger als diejenige der beschriebenen Schutz schaltung. Dieser Feinschutz kann durch Verwendung eines Schaltelementes zur Realisierung des Längsschalters La ergänzt sein, der im Durchlaßzustand einen für eine Strombegrenzung relevanten Widerstand aufweist.

**Patentansprüche**

1. Schutzschaltung für den Überspannungsschutz einer Teilnehmeranschlußschaltung eines digitalen Zeitmultiplex-Fernmeldenetzes, insbesondere Fernsprechnetzes, die eine elektronische Schnittstellenschaltung enthält, sowie für den Überspannungsschutz der der Teilnehmeranschlußschaltung zugeordneten elektronischen Schalter für den Testzugriff, durch die für jede Ader der angeschlossenen Teilnehmeranschlußleitung bzw. jeden entsprechenden Anschluß der Teilnehmeranschlußschaltung gesondert eine Trennung der Leitungsadern von der Teilnehmeranschlußschaltung vorgenommen und ein separater Testzugriff zu den Leitungsadern und/oder zu den entsprechenden Anschlüssen der Teilnehmeranschlußschaltung wirksam geschaltet werden kann, mit folgenden Merkmalen:

   a) einem je Leitungsader (a, b) vorgesehenen und auf der Leitungsseite des genannten elektronischen Schalters (STa1) für den Testzugriff auf die Teilnehmeranschlußleitung (TL) angeschlossenen Schwellwertglied (RS1/DT1), identischen Aufbaus wie das zur jeweils anderen Ader gehörende Schwellwertglied, durch das Überspannungen auf einen Erdpotential führenden Schaltungspunkt abgeleitet werden, sowie

   b) einem je Leitungsader vorgesehenen durch ein Schaltelement erhöhter Spannungsfestigkeit gebildeten Strompfad, über den auch im Falle einer Stromunterbrechung auf der Teilnehmeranschlußleitung durch Zerstörung des Schwellwertgliedes noch eine Prüfung der Teilnehmeranschlußleitung auf Leitungsunterbrechung vorgenommen werden kann,

   **dadurch gekennzeichnet,**
   daß das Schwellwertglied (RS1/DT) aus einem in die Ader der Anschlußleitung eingefügten niederohmigen Widerstand (RS1) sowie durch ein auf der Seite der Teilnehmeranschlußschaltung (SLIC) an diesen Widerstand angeschlossenes und andererseits an einem Erdpotential führenden Schaltungspunkt liegendes schwellwertbehaftetes Schaltelement (DT1) gebildet ist, und daß der genannte Strompfad durch einen spannungsfesten hochohmigen Widerstand (RZ) gebildet ist, der dem niederohmigen Widerstand (RS1) des Schwellwertgliedes parallel geschaltet ist.

2. Schaltung nach Anspruch 1,
   **dadurch gekennzeichnet,**
   daß an die Anschlüsse der Teilnehmeranschlußschaltung (SLIC) jeweils auf der Teilnehmeranschlußschaltungsseite des betreffenden Zugriffsschalters (STa2) für den Zugriff auf die Teilnehmeranschlußschaltung ein weiteres Schwellwertglied (D1, D2) angeschlossen ist, dessen Ansprechschwelle unterhalb der Ansprechschwelle der übrigen Schwellwertglieder liegt.

3. Schaltung nach Anspruch 2,
   **dadurch gekennzeichnet,**
   daß als Trennungsschalter (La) elektronische Bauelemente verwendet werden, die im Durchlaßzustand einen für eine Strombegrenzung relevanten Durchlaßwiderstand aufweisen.

**Claims**

1. Protection circuit for the overvoltage protection of a subscriber line circuit of a digital time-division multiplex telecommunication network, particularly a telephone network, which circuit contains an electronic interface circuit, and for the overvoltage protection of the electronic switches for test access, allocated to the subscriber line circuit, by means of which the line wires are separately disconnected from the subscriber line circuit for each wire of the connected subscriber line and each corresponding connection of the subscriber line circuit and a separate test access to the line wires and/or to the corresponding connections of the subscriber line circuit can be connected to be effective, having the following features:

   a) a threshold element (RS1/DT1) provided for each line wire (a, b) and connected on the line side of the said electronic switch (STa1) for the test access to the subscriber line (TL), of identical construction as the threshold element belonging to the other wire in each case, by means of which overvoltages are bypassed to a circuit point leading to an earth potential, and

   b) a current path provided for each line wire and formed by a switching element of increased dielectric strength, via which the subscriber line can still be tested for line interruption even in the case of a current interruption on the subscriber line due to destruction of the threshold element,

characterised in that the threshold element (RS1/DT) is formed from a low-resistance resistor (RS1) inserted into the wire of the subscriber line and by a switching element (DT1) with a threshold value, which is connected to this resistor on the side of the subscriber line circuit (SLIC) and, on the other hand, is located at a circuit point carrying earth potential, and in that the said current path is formed by a high-resistance resistor (RZ) with high dielectric strength which is connected in parallel with the low-resistance resistor (RS1) of the threshold element.

2. Circuit according to Claim 1, characterised in that a further threshold element (D1, D2), the response threshold of which is below the response threshold of the remaining threshold elements, is connected to the connections of the subscriber line circuit (SLIC) in each case on the subscriber line circuit side of the relevant access switch (STa2) for access to the subscriber line circuit.

3. Circuit according to Claim 2, characterised in that electronic components, which have an on-state impedance relevant to current limiting in the on-state are used as isolating switches (La).

**Revendications**

1. Circuit de protection servant à assurer la protection, vis-à-vis des surtensions, d'un circuit de raccordement d'abonné d'un réseau de télécommunications numérique à multiplexage temporel, notamment d'un réseau téléphonique, qui contient un circuit électronique d'interface, ainsi que pour assurer la protection, vis-à-vis des surtensions, des interrupteurs électroniques pour un accès de test et associés au circuit de raccordement d'abonné, et au moyen desquels, pour chaque conducteur de la ligne d'abonné raccordée ou pour chaque borne correspondante du circuit de raccordement d'abonné, une séparation des conducteurs de la ligne vis-à-vis du circuit de raccordement d'abonné est réalisée séparément et un accès séparé de test aux conducteurs de la ligne et/ou aux bornes correspondantes du circuit de raccordement d'abonné peut être déclenché, présentant les particularités suivantes :

    a) un circuit à valeur de seuil (RS1/DT1), qui est prévu pour chaque conducteur (a,b) de la ligne et est raccordé au côté ligne dudit interrupteur électronique (STa1) pour l'accès de test à la ligne de raccordement d'abonné (TL), et possède la même constitution que le circuit à valeur de seuil qui est associé respectivement à l'autre conducteur, et à l'aide duquel des surtensions sont dérivées en direction d'un point du circuit placé au potentiel de terre, et

    b) une voie de courant prévue pour chaque conducteur de la ligne et formée par un élément de commutation présentant une rigidité diélectrique accrue et au moyen de laquelle également dans le cas d'une interruption du courant dans la ligne d'abonné, due à une destruction du circuit à valeur de seuil, un contrôle d'une interruption éventuelle de la ligne d'abonné peut être encore réalisé,

caractérisé par le fait
que le circuit à valeur de seuil (RS1/DT) est constitué par une résistance de faible valeur ohmique (RS1), insérée dans les conducteurs de la ligne de raccordement, ainsi que par un élément de commutation (DT1) qui est raccordé à cette résistance, du côté du circuit de raccordement d'abonné (SLIC) et est raccordé par ailleurs au point du circuit raccordé au potentiel de terre et est affecté d'une valeur de seuil, et que ladite voie de courant est formée par une résistance (RZ) de forte valeur ohmique, qui résiste à la tension et est branchée en parallèle avec la résistance de faible valeur ohmique (RS1) du circuit à valeur de seuil.

2. Circuit selon la revendication 1, caractérisé par le fait qu'aux bornes du circuit de raccordement d'abonné (SLIC) est raccordé, respectivement sur le côté du circuit de raccordement d'abonné de l'interrupteur considéré d'accès (STa2) pour l'accès au circuit de raccordement d'abonné, un autre circuit à valeur de seuil (D1,D2), dont le seuil de réponse est inférieur au seuil de réponse des autres circuits à valeur de seuil.

3. Circuit suivant la revendication 2, caractérisé par le fait qu'on utilise comme interrupteur de séparation (La), des composants électroniques qui, à l'état passant, possèdent une résistance en direct, qui sert à limiter le courant.

FIG 1

FIG 2